(19)

Europäisches
Patentamt

European
Patent Office

Office européen
des brevets

(11) **EP 4 309 786 A1**

(12) **EUROPEAN PATENT APPLICATION**
published in accordance with Art. 153(4) EPC

(43) Date of publication:
 **24.01.2024  Bulletin 2024/04**

(21) Application number: **22771474.8**

(22) Date of filing: **16.03.2022**

(51) International Patent Classification (IPC):
 *B01J 23/83* (2006.01)    *B01J 23/34* (2006.01)
 *B01J 23/86* (2006.01)    *B01J 23/889* (2006.01)
 *C01B 32/40* (2017.01)

(52) Cooperative Patent Classification (CPC):
 **B01J 23/34; B01J 23/83; B01J 23/86;**
 **B01J 23/889; C01B 32/40**

(86) International application number:
 **PCT/JP2022/011954**

(87) International publication number:
 **WO 2022/196729 (22.09.2022 Gazette 2022/38)**

(84) Designated Contracting States:
 **AL AT BE BG CH CY CZ DE DK EE ES FI FR GB**
 **GR HR HU IE IS IT LI LT LU LV MC MK MT NL NO**
 **PL PT RO RS SE SI SK SM TR**
 Designated Extension States:
 **BA ME**
 Designated Validation States:
 **KH MA MD TN**

(30) Priority: **17.03.2021   JP 2021043335**

(71) Applicant: **SEKISUI CHEMICAL CO., LTD.**
 **Osaka-shi**
 **Osaka**
 **530-8565 (JP)**

(72) Inventors:
 • **IIJIMA, Keisuke**
  **Tsukuba-shi, Ibaraki 300-4292 (JP)**
 • **TAKIZAWA, Koji**
  **Tsukuba-shi, Ibaraki 300-4292 (JP)**
 • **SAKURAI, Risa**
  **Tsukuba-shi, Ibaraki 300-4292 (JP)**

(74) Representative: **Ter Meer Steinmeister & Partner**
 **Patentanwälte mbB**
 **Nymphenburger Straße 4**
 **80335 München (DE)**

(54) **REDUCING AGENT, AND GAS PRODUCTION METHOD**

(57)    [Problem] There are provided: a reducing agent in which, in a perovskite oxide, when a combination of metal elements, a composition ratio thereof and the like are set, the amount of carbon dioxide is sufficiently reduced, the efficiency of converting carbon dioxide into valuables containing carbon (that is, a yield of valuables containing carbon) is high, and the efficiency of reduction using hydrogen is high; and a method of producing a gas using such a reducing agent.

[Solution] The reducing agent of the present invention produces valuables containing carbon by reduction of carbon dioxide and is easily reduced using hydrogen. The reducing agent contains an oxygen carrier having a perovskite type crystalline structure represented by a composition formula: $ABO_x$ (x is a real number of 2 to 4) and having oxygen ion conductivity, the A-site element includes at least one of metal elements belonging to Group 1 to Group 3 in the periodic table, the B-site element includes at least one metal element different from the A-site element, and when the electronegativity of the A-site element is $A\chi$, the electronegativity of the B-site element is $B\chi$, and the temperature at which carbon dioxide is brought into contact with the reducing agent is $T(K)$, relationships of $A\chi < B\chi$ and $10^4 \times [(B\chi - A\chi)/T] < 8.31$ are satisfied.

EP 4 309 786 A1

**Description**

[Technical Field]

The present invention relates to a reducing agent and a method of producing a gas, and more specifically, to a for example, a reducing agent that can be used in a chemical looping method and a method of producing a gas using such a reducing agent.

[Background Art]

In recent years, the concentration of carbon dioxide, which is a type of a greenhouse gas, in the atmosphere, has continued to rise. Rising of the concentration of carbon dioxide in the atmosphere contributes to global warming. Therefore, it is important to recover carbon dioxide released into the atmosphere, and furthermore, if the recovered carbon dioxide can be converted into a valuable substance and reused, a carbon recycling society can be realized.

Conventionally, as a method of producing carbon monoxide from carbon dioxide, a method of using a reverse water gas shift reaction is known. However, in this conventional reverse water gas shift reaction, since the product carbon monoxide and water coexist in the system, there is a problem in that efficiency of converting carbon dioxide into carbon monoxide is low due to chemical equilibrium constraints.

Therefore, in order to address the problem, a chemical looping method is used to convert carbon dioxide into carbon monoxide. The chemical looping method referred to here is a method in which the reverse water gas shift reaction is divided into two reactions including a reduction reaction using hydrogen and a reaction of producing carbon monoxide from carbon dioxide, and these reactions are linked with an oxygen carrier (for example, metal oxide: $MO_x$) (refer to the following formula).

$$H_2 + MO_x \rightarrow H_2O + MO_{x-1}$$

$$CO_2 + MO_{x-1} \rightarrow CO + MO_x$$

Here, in the formula, $MO_{x-1}$ represents a state in which a part or all of the metal oxide has been reduced.

In such a chemical looping method, during respective reactions, since water and carbon monoxide, which are substrates for a reverse reaction, do not coexist, it is possible to obtain a higher efficiency of converting carbon dioxide into carbon monoxide than the chemical equilibrium of the reverse water gas shift reaction.

For example, PTL 1 discloses a catalyst complex which can be used in a chemical looping method and includes a perovskite oxide represented by a formula $ABO_3$ (A is an alkaline earth element, a rare earth element, an alkali metal element, a metal element or a combination thereof, and B is a transition metal element, a metal element or a combination thereof) and an oxide support having a formula different from that of the perovskite oxide.

[Citation List]

[Patent Literature]

[PTL 1] WO 2018/222749

[Summary of Invention]

[Technical Problem]

However, according to the studies performed by the inventors, PTL 1 discloses only $La_{0.75}Sr_{0.25}FeO_3$ as a specific example of a perovskite oxide, and it has been found that, in order to reduce this perovskite oxide, it is necessary to use a large amount of hydrogen. In order to produce hydrogen, a large amount of energy is inevitably consumed, and because carbon dioxide is generated when this energy is obtained, it is hard to say that the effect of reducing an amount of carbon dioxide is strong.

The present invention has been made in view of such circumstances and an object of the present invention is to provide a reducing agent in which, in a perovskite oxide, when a combination of metal elements, a composition ratio thereof and the like are set, the amount of carbon dioxide is sufficiently reduced, and the efficiency of converting carbon dioxide into valuables containing carbon (that is, a yield of valuables containing carbon) and/or the efficiency of reduction using hydrogen is high, and a method of producing a gas using such a reducing agent.

[Solution to Problem]

Such objects are achieved by the present invention below.

(1) A reducing agent of the present invention is a reducing agent that produces valuables containing carbon by reducing carbon dioxide,

wherein the reducing agent contains an oxygen carrier having a perovskite type crystalline structure represented by a composition formula: $ABO_x$ (x is a real number of 2 to 4) and having oxygen ion conductivity,
wherein the A-site element includes at least one of metal elements belonging to Group 1 to Group 3 in the periodic table,
wherein the B-site element includes at least one metal element different from the A-site element, and
wherein, when the electronegativity of the A-site element is $A\chi$, the electronegativity of the B-site element is $B\chi$, and the temperature at which carbon dioxide is brought into contact with the reducing agent is T(K), relationships of $A\chi < B\chi$ and $10^4 \times [(B\chi - A\chi)/T] < 8.31$ are satisfied.

(2) In the reducing agent of the present invention, preferably, the electronegativity $A\chi$, the electronegativity $B\chi$ and the temperature T(K) satisfy a relationship of $10^4 \times [(B\chi - A\chi)/T] \leq 8.07$.
(3) In the reducing agent of the present invention, preferably, the electronegativity $A\chi$, the electronegativity $B\chi$ and the temperature T(K) satisfy a relationship of $10^4 \times [(B\chi - A\chi)/T] \leq 7.47$.
(4) In the reducing agent of the present invention, preferably, the electronegativity $A\chi$ and the electronegativity $B\chi$ additionally satisfy a relationship that $B\chi - A\chi$ is 0.90 or less.
(5) In the reducing agent of the present invention, preferably, the electronegativity $A\chi$ and the electronegativity $B\chi$ additionally satisfy a relationship that $B\chi - A\chi$ is 0.75 or less.
(6) In the reducing agent of the present invention, preferably, the electronegativity $A\chi$ is 0.93 to 1.3.
(7) In the reducing agent of the present invention, preferably, the electronegativity $A\chi$ is 1 to 1.2.
(8) In the reducing agent of the present invention, preferably, the electronegativity $B\chi$ is 1.40 to 1.88.
(9) In the reducing agent of the present invention, preferably, the A-site element includes at least one of lanthanum (La), calcium (Ca), strontium (Sr), barium (Ba), neodymium (Nd), samarium (Sm), gadolinium (Gd) and praseodymium (Pr) .
(10) In the reducing agent of the present invention, preferably, the A-site element further includes at least one element selected from among lithium (Li), sodium (Na), potassium (K), rubidium (Rb), cesium (Cs), and magnesium (Mg).
(11) In the reducing agent of the present invention, preferably, the A-site element includes a first metal element having an electronegativity of more than 1 and a second metal element having an electronegativity of 1 or less, and the molar ratio of the first metal element to the second metal element is 2.5 or less.
(12) In the reducing agent of the present invention, preferably, the B-site element includes at least one of magnesium (Mg), scandium (Sc), chromium (Cr), manganese (Mn), iron (Fe), cobalt (Co), nickel (Ni) and gallium (Ga).
(13) In the reducing agent of the present invention, preferably, the B-site element includes at least one metal element having an electronegativity of 1.83 or less.
(14) In the reducing agent of the present invention, preferably, the B-site element includes at least one metal element having an electronegativity of 1.81 or less.
(15) In the reducing agent of the present invention, preferably, the amount of the oxygen carrier with respect to 100 parts by mass of the reducing agent is more than 90 parts by mass.
(16) In the reducing agent of the present invention, preferably, the reducing agent, by being brought into contact with a raw material gas containing carbon dioxide, reduces carbon dioxide and is used to produce a product gas containing carbon monoxide as the valuables containing carbon.
(17) In the reducing agent of the present invention, preferably, the reducing agent is reduced by being brought into contact with a reducing gas containing hydrogen.
(18) In the reducing agent of the present invention, preferably, the amount of hydrogen brought into contact with the reducing agent with respect to 1 g of the reducing agent is 0.01 to 50 mmol.
(19) In the reducing agent of the present invention, preferably, the amount of hydrogen brought into contact with the reducing agent with respect to 1 g of the reducing agent is 1 to 50 mmol.
(20) In the reducing agent of the present invention, preferably, the amount of carbon dioxide brought into contact with the reducing agent with respect to 1 g of the reducing agent is 0.01 to 50 mmol.
(21) In the reducing agent of the present invention, preferably, the amount of carbon dioxide brought into contact with the reducing agent with respect to 1 g of the reducing agent is 1 to 50 mmol.
(22) In the reducing agent of the present invention, preferably, the reducing agent is used in separate reduction processes, which are a reduction reaction of the carbon dioxide and a reduction reaction of the reducing agent.

(23) A method of producing a gas according to the present invention includes bringing the reducing agent of the present invention into contact with a raw material gas containing carbon dioxide, reducing the carbon dioxide, and producing a product gas containing carbon monoxide.

[Advantageous Effects of Invention]

According to the present invention, it is possible to efficiently produce valuables containing carbon from carbon dioxide while sufficiently reducing carbon dioxide. In addition, the reducing agent of the present invention can be used, for example, in a chemical looping method.

[Brief Description of Drawings]

[Fig. 1]

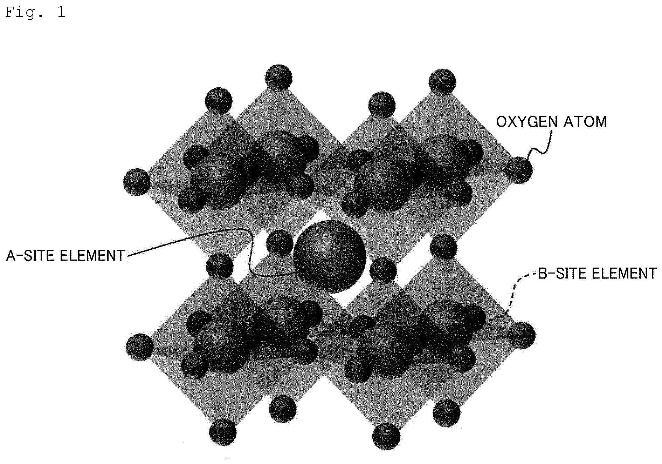

Fig. 1 is a diagram schematically showing a perovskite type crystalline structure.

[Description of Embodiments]

Hereinafter, a reducing agent and a method of producing a gas according to the present invention will be described in detail with reference to preferable embodiments.

[Reducing Agent]

The reducing agent of the present invention is used to reduce carbon dioxide by bringing it into contact with a raw material gas containing carbon dioxide and to produce a product gas containing carbon monoxide (valuables containing carbon) (that is, used in a method of producing a gas of the present invention). In addition, the reducing agent can be reduced (reproduced) by bringing a reducing gas into contact with the oxidized reducing agent.

In this case, preferably, when the raw material gas and the reducing gas are alternately passed into the reaction tube (reaction container) filled with the reducing agent of the present invention, conversion of carbon dioxide into carbon monoxide using the reducing agent and reproduction of the reducing agent in an oxidized state using the reducing gas are performed.

The reducing agent of the present invention contains an oxygen carrier having oxygen ion conductivity.

Here, the oxygen carrier is a compound that can form reversible oxygen vacancies, and is a compound in which oxygen atoms are deficient due to its reduction, but when the compound in an oxygen-deficient state (reduced state) comes into contact with carbon dioxide, it exhibits a function of depriving carbon dioxide of oxygen atoms and performing reduction.

The oxygen carrier in the present invention has a perovskite type crystalline structure represented by a composition formula: $ABO_x$ (x is a real number of 2 to 4) (refer to Fig. 1). The composition formula: $ABO_x$ may have a perovskite type crystalline structure, and x may have any real number in the range of 2 to 4.

Here, the perovskite type crystalline structure is a structure in which a B-site element represented by a composition formula $ABO_x$ is present inside an octahedral structure with six oxygen atoms as vertices in the crystalline structure and an A-site element is present in gaps where a plurality of octahedrons are aligned. The octahedral structure with six oxygen atoms as vertices may or may not be a regular octahedron, and the entire crystalline structure may be isotropic or anisotropic.

More specifically, the perovskite type crystalline structure may be a crystal structure such as a cubic, rhombohedral, tetragonal, or orthorhombic structure. Here, depending on the number of oxygen atoms contained in the crystalline structure, an oxygen atom may not be present at least one vertex of the octahedral structure. In addition, oxygen atoms that do not belong to vertices of the octahedral structure may be present.

The metal composition and crystalline structure in the perovskite type crystalline structure can be measured by an emission spectral analysis method, for example, energy dispersive X-ray spectroscopy (EDX method), inductively coupled plasma emission spectroscopy (ICP method), X-ray fluorescence spectroscopy (XRF method), X-ray photoelectron spectroscopy (XPS method), or X-ray diffraction method (XRD). The method is preferably an ICP method, an XRD method, a scanning electron microscope-energy dispersive X-ray spectroscopy (SEM-EDX method), a transmission electron microscope-energy dispersive X-ray spectroscopy (TEM-EDX method) or the like, and a perovskite type reducing agent can be identified by the at least one method. More preferably, the above analysis methods are used in combination, and the obtained analysis results can be combined to analyze or identify the reducing agent of the present invention.

In the oxygen carrier in the present invention, in the perovskite type crystalline structure, the A-site element includes at least one of metal elements belonging to Group 1 to Group 3 in the periodic table, and the B-site element includes at least one metal element different from the A-site element.

The inventors have focused on the electronegativity of the A-site element and the B-site element that constitute such a perovskite type crystalline structure, and conducted extensive studies. Here, in this specification, the electronegativity is Pauling's electronegativity.

In addition, when each site element is composed of two or more metal elements, the electronegativity of each site element is a sum (weighted average) of the electronegativity of the metal elements constituting it times the molar ratio of the metal elements in each site element.

Specifically, when the metal element composition of the A-site element is $A1_{x1}A2_{x2}...An_{xn}$ (n is a natural number, xn is a molar ratio, $x1+x2+...+xn=1$), and the electronegativity of An is $\chi n$, the electronegativity $A\chi$ of the A-site element is $\chi 1 \times \chi 1 + \chi 2 \times x2 + ... + \chi n \times xn$.

In addition, the same applies to the electronegativity $B\chi$ of the B-site element, like the electronegativity $A\chi$ of the A-site element.

According to the studies performed by the inventors, it is estimated that the electronegativity $A\chi$ of the A-site element contributes to ease of entry and exit of oxygen atoms (oxygen ions) with respect to the oxygen carrier (perovskite type crystalline structure), and the electronegativity $B\chi$ of the B-site element contributes to improving adsorption of carbon dioxide to the oxygen carrier and activity of carbon dioxide.

Here, in the present invention, the electronegativity $A\chi$ of the A-site element, the electronegativity $B\chi$ of the B-site element and the temperature T(K) at which carbon dioxide is brought into contact with the reducing agent are set so that they satisfy relationships of $A\chi<B\chi$ and $10^4 \times [(B\chi-A\chi)/T]<8.31$.

In the present invention, the electronegativity $A\chi$ of the A-site element and the electronegativity $B\chi$ of the B-site element are preferably set so that they additionally satisfy relationships that $A\chi<B\chi$ and $B\chi-A\chi$ is 0.90 or less.

In the perovskite type crystalline structure, the A-site element and the B-site element can be present in close proximity. In particular, in the present invention, the electronegativity $A\chi$ of the A-site element and the electronegativity $B\chi$ of the B-site element do not deviate too much. Therefore, oxygen atoms are transferred easily and smoothly between the A-site element and the B-site element. As a result, even with a small amount of a reducing gas, oxygen atoms can be extracted from the oxygen carrier in the oxidized state, and reproduction thereof can be performed stably.

In this manner, when the amount of the reducing gas used is reduced, it is possible to reduce the amount of energy consumed when the reducing gas is produced, and eventually, it is possible to reduce the amount of carbon dioxide generated when the energy is obtained so that the effect of reducing an amount of carbon dioxide is strong.

In addition, conventionally, when the performance of the reducing agent having a perovskite type crystalline structure is predicted, for each reducing agent produced (oxygen carrier), it is necessary to calculate the oxygen vacancy formation energy using dedicated software such as VASP. The oxygen vacancy formation energy is an important parameter for predicting oxygen carrier performance, which is used to predict oxygen diffusion. On the other hand, when the number of additive metal species increases and the composition formula becomes complex, the diversity of the local environment at the atom and lattice level such as the degree of freedom of ion arrangement and the defect generation position increases innumerably and calculation thereof takes much effort and time.

On the other hand, in the present invention, in the oxygen carrier having a perovskite type crystalline structure, when the types of the A-site element and the B-site element are selected, and the relationship between the electronegativity $A\chi$ of the A-site element and the electronegativity $B\chi$ of the B-site element, the relationship between $A\chi$ and $B\chi$ and the temperature at which the reducing agent is brought into contact and the like are set, it is possible to predict the performance of the reducing agent to some extent. Therefore, it is possible to omit calculation of the oxygen vacancy formation energy using dedicated software, which is very convenient.

$10^4 \times [(B\chi-A\chi)/T]$ may be less than 8.31 and is preferably 8.07 or less and more preferably 7.47 or less. In addition, $10^4 \times [(B\chi-A\chi)/T]$ is preferably 3.50 or more.

When $10^4 \times [(B\chi-A\chi)/T]$ is set to be within the above range, the ability of the oxygen carrier to absorb and release oxygen atoms and the ability to adsorb and activate carbon dioxide can be appropriately exhibited in each temperature range and carbon dioxide can be efficiently converted into valuables containing carbon. In addition, the perovskite type crystalline structure is easily stabilized.

$B\chi-A\chi$ may be 0.90 or less, and is preferably 0.75 or less, more preferably 0.65 or less, and still more preferably 0.55 or less. $B\chi-A\chi$ is preferably 0.3 or more, more preferably 0.35 or more, and still more preferably 0.4 or more. When $B\chi-A\chi$ is set to be within the above range, it is possible to further improve the above effect. In addition, the perovskite type crystalline structure is easily stabilized.

In addition, the oxygen carrier having a perovskite type crystalline structure hardly adsorbs impurities and can maintain an ability to deprive carbon dioxide of oxygen atoms over a long time. As a result, it is possible to increase efficiency of converting carbon dioxide into carbon monoxide using the reducing agent and it is possible to increase reduction efficiency using a reducing gas containing hydrogen.

The electronegativity $A\chi$ of the A-site element is preferably 0.93 to 1.3, more preferably 1 to 1.2, still more preferably 1.025 to 1.15, and yet more preferably 1.05 to 1.1. Thereby, oxygen atoms enter and exit the oxygen carrier more smoothly.

The A-site element may include at least one of metal elements belonging to Group 1 to Group 3 in the periodic table, and preferably includes at least one of lanthanum (La; 1.1), calcium (Ca; 1.00), strontium (Sr; 0.95), barium (Ba; 0.89), neodymium (Nd; 1.14), samarium (Sm; 1.17), gadolinium (Gd; 1.2) and praseodymium (Pr; 1.13). Here, the number of the element symbol is the Pauling's electronegativity. When the A-site element includes these metal elements, oxygen atoms enter and exit the oxygen carrier more smoothly.

In addition, the A-site element preferably includes a first metal element having an electronegativity of more than 1 and a second metal element having an electronegativity of 1 or less. When the A-site element includes two or more metal elements in such a combination, it is easy to adjust the degree of entry and exit of oxygen atoms with respect to the oxygen carrier.

The molar ratio of the first metal element to the second metal element included in the A-site element is preferably 2.5 or less, more preferably 1.5 or less, and still more preferably 1.2 or less. In this case, the electronegativity $A\chi$ of the A-site element is easily adjusted to be within the above range.

Examples of first metal elements include metal elements belonging to lanthanides and actinoids, and metal elements belonging to lanthanides are preferable, and at least one of lanthanum, samarium, neodymium and gadolinium is preferable, and neodymium and lanthanum are more preferable.

On the other hand, examples of second metal elements include metal elements belonging to alkali metals and alkaline earth metals, and at least one of lithium, sodium, potassium, rubidium, cesium, magnesium, calcium, strontium and barium is preferable, and at least one of lithium, sodium, potassium, rubidium, cesium, magnesium, calcium and strontium is more preferable.

When these metal elements are selected, the A-site element and the B-site element interact more strongly, and oxygen atoms are transferred more smoothly between them.

On the other hand, the electronegativity $B\chi$ of the B-site element is preferably 1.40 to 1.88, more preferably 1.50 to 1.85, and still more preferably 1.55 to 1.75. Thereby, it is possible to further improve adsorption of carbon dioxide with respect to the oxygen carrier and the activity of carbon dioxide.

The B-site element may include at least one metal element different from the A-site element, and preferably includes at least one of magnesium (Mg; 1.31), scandium (Sc; 1.36), chromium (Cr; 1.66), manganese (Mn; 1.55), iron (Fe; 1.83), cobalt (Co; 1.88), nickel (Ni; 1.91), tungsten (W; 2.36), palladium (Pd; 2.20), aluminum (Al; 1.61), indium (In; 1.78), copper (Cu; 1.90) and gallium (Ga; 1.81), and preferably includes at least one of magnesium (Mg), scandium (Sc), chromium (Cr), manganese (Mn), iron (Fe), cobalt (Co), nickel (Ni) and gallium (Ga). Here, the number of the element symbol is the Pauling's electronegativity. When the B-site element includes these metal elements, it is possible to further improve adsorption of carbon dioxide with respect to the oxygen carrier and reduction activity of carbon dioxide, and it is possible to increase the efficiency of reduction using a reducing gas containing hydrogen.

The B-site element preferably includes at least one metal element having an electronegativity of 1.83 or less, more preferably includes at least one metal element having an electronegativity of 1.81 or less, still more preferably includes at least one metal element having an electronegativity of 1.7 or less, and yet more preferably includes at least one metal element having an electronegativity of 1.6 or less. In this case, the electronegativity $B\chi$ of the B-site element is easily adjusted to be within the above range.

Examples of such metal elements include magnesium, scandium, chromium, manganese, and gallium, and at least one of magnesium, scandium, chromium and manganese is preferable, and manganese is more preferable. When these metal elements are selected, the A-site element and the B-site element interact more strongly, and oxygen atoms are transferred more smoothly between them.

Here, when the B-site element includes two or more metal elements, a combination thereof is preferably a combination of iron and manganese, a combination of manganese and magnesium, or a combination of manganese and cobalt.

The amount of the oxygen carrier with respect to 100 parts by mass of the reducing agent is preferably more than 90 parts by mass, more preferably 95 parts by mass or more, and may be 100 parts by mass. When the amount of the oxygen carrier contained in the reducing agent is set to be within the above range, conversion of carbon dioxide into carbon monoxide using the reducing agent is promoted while maintaining a sufficient effect of reducing an amount of carbon dioxide, that is, it is possible to further increase conversion efficiency, and it is possible to increase efficiency of reduction using the reducing gas containing hydrogen.

As a form in which the entire reducing agent is not composed of an oxygen carrier, a form in which fine particles of the oxygen carrier are bound with a binder (support) may be exemplified. The binder is not particularly limited as long as it is hardly modified according to the raw material gas, reaction conditions and the like.

Specific examples of binders include carbon materials (graphite, graphene, etc.), zeolite, montmorillonite, $SiO_2$, $ZrO_2$, $TiO_2$, $V_2O_5$, MgO, $Al_2O_3$ and complex oxides containing these.

The filling density of the reducing agent is preferably 4 g/mL or less, more preferably 0.5 to 3 g/mL, and still more preferably 1 to 2.5 g/mL. If the filling density is too low, the gas passing rate becomes too fast, and the time for which the reducing agent is brought into contact with the raw material gas and the reducing gas is reduced. As a result, the efficiency of converting carbon dioxide into carbon monoxide using the reducing agent and the efficiency of reproduction of the reducing agent in an oxidized state using the reducing gas tend to decrease. On the other hand, if the filling density is too high, the gas passing rate becomes too slow, the reaction is unlikely to proceed, and it takes a long time to produce the product gas.

The pore volume of the reducing agent is preferably 0.1 $cm^3/g$ or more, more preferably 1 to 30 $cm^3/g$, and still more preferably 5 to 20 $cm^3/g$. If the pore volume is too small, it becomes difficult for the raw material gas and the reducing gas to enter the inside of the reducing agent. As a result, the contact area between the reducing agent and the raw material gas and the reducing gas is reduced and the efficiency of converting carbon dioxide into carbon monoxide using the reducing agent and the efficiency of reproduction of the reducing agent in an oxidized state using the reducing gas tend to decrease. On the other hand, even if the pore volume increases and exceeds the upper limit value, no further increase in the effect can be expected, and the mechanical strength tends to decrease depending on the type of the reducing agent.

The shape of the reducing agent is not particularly limited, and is preferably, for example, a granular shape. If the shape is granular, it is easy to adjust the filling density of the reducing agent to be within the above range.

Here, the term "granular" is a concept including a powder form, a particle form, a mass form, a pellet form, etc, and the shape thereof may be any of a spherical shape, a plate shape, a polygonal shape, a crushed shape, a columnar shape, a needle shape, and a scale shape.

The average particle size of the reducing agent is preferably 1 um to 5 mm, more preferably 10 um to 1 mm, and still more preferably 20 um to 0.5 mm. When a reducing agent having such an average particle size is used, the filling density thereof tends to fall within the above range.

Here, in this specification, the average particle size is the average value of arbitrary 200 particle sizes of the reducing agent in one field observed under an electron microscope. In this case, "particle size" is the maximum length among distances between two points on the outline of the reducing agent. Here, when the reducing agent has a columnar shape, the maximum length among distances between two points on the outline of the end surface thereof is defined as "particle size." In addition, the average particle size is, for example, the average particle size of secondary particles, when masses are formed and primary particles are aggregated.

The BET specific surface area of the reducing agent is preferably 1 to 500 $m^2/g$, more preferably 3 to 450 $m^2/g$, and still more preferably 5 to 400 $m^2/g$. When the BET specific surface area is set to be within the above range, it becomes easy to improve the efficiency of converting carbon dioxide into carbon monoxide using the reducing agent.

In addition, in the present invention, since the distortion of lattice defects of the oxygen carrier (perovskite type crystalline structure) can sufficiently increase, the oxygen capacity of the reducing agent can be kept high in a wide range from a low temperature (about 400°C) to a high temperature (about 1,000°C). That is, the reducing agent of the present invention can efficiently convert carbon dioxide into carbon monoxide in a wide temperature range, and can be efficiently reduced using a reducing gas containing hydrogen.

The oxygen capacity of the reducing agent at 400°C is preferably 1 to 40 mass% and more preferably 2 to 30 mass%. If the oxygen capacity of the reducing agent at a low temperature is within the above range, it means that the oxygen capacity is sufficiently high even at a temperature (650°C or higher) during an actual operation, and it can be said that the reducing agent has very high efficiency of converting carbon dioxide into carbon monoxide.

[Method of Producing Reducing Agent]

Next, a method of producing a reducing agent will be described.

The method of producing a reducing agent is not particularly limited, and examples thereof include a sol-gel method, a coprecipitation method, a solid phase method, and a hydrothermal synthesis method.

As an example, a reducing agent can be produced, for example, as follows. First, a salt of metal elements constituting a reducing agent is dissolved in water to prepare an aqueous solution. Next, the aqueous solution is gelled and then dried and calcined. That is, the reducing agent of the present invention can be easily and reliably produced by a so-called sol-gel method.

Here, for adjustment of the aqueous solution, for example, acidic water adjusted to be acidic with citric acid, acetic acid, malic acid, tartaric acid, hydrochloric acid, nitric acid, a mixture thereof or the like may be used.

Examples of slats of metal elements include nitrates, sulfates, chlorides, hydroxides, carbonates and composites thereof, and among these, nitrates are preferable. In addition, for salts of metal elements, as necessary, hydrates may be used.

The gel may be dried at a temperature of preferably 20 to 200°C, and more preferably 50 to 150°C for a time of preferably 0.5 to 20 hours, and more preferably 1 to 15 hours. When drying is performed in this manner, the gel can be uniformly dried.

The gel may be calcined at a temperature of preferably 300 to 1,200°C, more preferably 700 to 1,000°C for a time of preferably 1 to 24 hours, and more preferably 1.5 to 20 hours. The gel preferably becomes an oxide upon calcination, but can be easily converted into a reducing agent according to calcination under the calcination conditions. In addition, it is possible to prevent excessive particle growth of the reducing agent according to calcination under the calcination conditions.

The temperature may be raised at a temperature increase rate of 1 to 20°C/min, and preferably at a temperature increase rate of 2 to 10°C/min until the calcination temperature is reached. Therefore, it is possible to promote particle growth of the reducing agent and avoid breakage of crystals (particles).

[Method of Using Reducing Agent]

A reducing agent of the present invention can be used, for example, in the chemical looping method, as described above. In addition, the reducing agent of the present invention can be used for reducing carbon dioxide as described above.

More specifically, it is preferable to perform a reduction reaction of carbon dioxide and a reduction reaction of the reducing agent, and the reducing agent is preferably used so that it circulates between the reduction reaction of carbon dioxide and the reduction reaction of the reducing agent. Here, in the reduction reaction of the reducing agent, other reducing agents (reducing gases) are used.

In addition, the reducing agent of the present invention is preferably used in a so-called reverse water gas shift reaction. The reverse water gas shift reaction is a reaction in which carbon monoxide and water are produced from carbon dioxide and hydrogen. When the chemical looping method is applied, the reverse water gas shift reaction that is divided into a reduction reaction of the reducing agent (first process) and a reduction reaction of carbon dioxide (second process) is performed, and the reduction reaction of the reducing agent is the reaction represented by the following Formula (A) and the reduction reaction of carbon dioxide is the reaction represented by the following Formula (B).

$$H_2 \text{ (gas)} + A_a B_b O_x \text{ (solid)} \rightarrow H_2 O \text{ (gas)} + A_a B_b O_{x-n} \text{ (solid)} \qquad (A)$$

$$CO_2 \text{ (gas)} + A_a B_b O_{x-n} \text{ (solid)} \rightarrow CO \text{ (gas)} + A_a B_b O_x \qquad (B)$$

Here, in Formulae (A) and (B), n is generally a value smaller than 3, preferably 0.02 to 1.5, more preferably 0.1 to 1.2, and still more preferably 0.15 to 1.0. Within the above range, it is possible to increase the hydrogen utilization rate of the reducing agent while favorably maintaining the perovskite type crystalline structure of the oxygen carrier.

That is, in the reduction reaction of the reducing agent, hydrogen, which is a type of a reducing gas, is oxidized to produce water. In addition, in the reduction reaction of carbon dioxide, carbon dioxide is reduced to produce carbon monoxide.

The reaction temperature in the reduction reaction of the reducing agent may be any temperature at which the reduction reaction can proceed and is preferably 300°C or higher, more preferably 400°C or higher, still more preferably 500°C or higher, and particularly preferably 550°C or higher. Within such a temperature range, the reduction reaction of the reducing agent can proceed efficiently.

The upper limit of the reaction temperature is preferably 1,000°C or lower, more preferably 850°C or lower, and still more preferably 800°C or lower. When the upper limit of the reaction temperature is set to be within the above range, it is possible to improve economic efficiency.

In addition, during the reduction reaction of the reducing agent, the amount of hydrogen brought into contact with the reducing agent in the oxidized state with respect to 1 g of the reducing agent is preferably 0.01 to 50 mmol. The amount of hydrogen with respect to 1 g of the reducing agent is preferably 0.1 mmol or more and more preferably 1 mmol or more. The amount of hydrogen with respect to 1 g of the reducing agent is preferably 35 mmol or less and more preferably 20 mmol or less. The amount of hydrogen with respect to 1 g of the reducing agent is preferably 1 mmol to 50 mmol.

For the reasons described above, the reducing agent of the present invention has a high hydrogen utilization rate because oxygen atoms enter and exit smoothly. Therefore, the reducing agent of the present invention is sufficiently reduced (reproduced) with a small amount of hydrogen. Accordingly, it contributes to reduction of energy required for hydrogen production and eventually contributes to reduction of the amount of carbon dioxide generated when the energy is obtained.

When 5.2 mmol of hydrogen is brought into contact with 1 g of the reducing agent, a specific hydrogen utilization rate of the reducing agent of the present invention is preferably 1.05 times or more, more preferably 2 times or more, still more preferably 3 times or more, particularly preferably 4 times or more, and most preferably 5 times or more the hydrogen utilization rate of the reducing agent (oxygen carrier) having a perovskite type crystalline structure represented by $La_{0.75}Sr_{0.25}FeO_3$. The upper limit of the hydrogen utilization rate is generally 18 times or less.

Here, the hydrogen utilization rate (%) is a value (expressed based on 100 percent) of the ratio of the amount (number of moles) of the generated carbon monoxide to the amount of hydrogen input (number of moles) brought into contact with 1 g of the reducing agent.

In addition, the reaction temperature in the reduction reaction of carbon dioxide is preferably 300°C or higher, more preferably 350°C or higher, and still more preferably 400°C or higher. Within this temperature range, a carbon dioxide reduction reaction can efficiently proceed.

The upper limit of the reaction temperature is preferably 1,000°C or lower, more preferably 850°C or lower, and still more preferably 800°C or lower. The reducing agent can perform a reaction of reducing carbon dioxide to carbon monoxide with high efficiency even at a low temperature, and thus the reduction reaction of carbon dioxide can be set at a relatively low temperature. In addition, if the upper limit of the reaction temperature is set to be within the above range, it is possible not only to facilitate utilization of waste heat but also further improve the economic efficiency.

In addition, during the reduction reaction of carbon dioxide, the amount of carbon dioxide brought into contact with the reducing agent with respect to 1 g of the reducing agent is preferably 0.01 to 50 mmol. The amount of carbon dioxide with respect to 1 g of the reducing agent is preferably 0.1 mmol or more and more preferably 1 mmol or more. The amount of carbon dioxide with respect to 1 g of the reducing agent is preferably 30 mmol or less and more preferably 20 mmol or less. For the reasons described above, the reducing agent of the present invention easily adsorbs carbon dioxide and facilitates entry and exit of oxygen atoms. Therefore, the reducing agent of the present invention has a high efficiency of converting carbon dioxide into carbon monoxide (that is, a large amount of carbon monoxide produced), and from this regard, contributes to reduction of the amount of carbon dioxide. On the other hand, since the reduction reaction is efficiently performed using the reducing gas containing hydrogen, it is possible to reproduce the reducing agent with a small amount of hydrogen.

When 5.2 mmol of carbon dioxide is brought into contact with 1 g of the reducing agent, a specific amount of carbon monoxide produced using the reducing agent of the present invention is preferably 1.05 times or more, more preferably 2 times or more, still more preferably 3 times or more, particularly preferably 4 times or more, and most preferably 5 times or more the amount of carbon monoxide produced using the reducing agent (oxygen carrier) having a perovskite type crystalline structure represented by $La_{0.75}Sr_{0.25}FeO_3$. The upper limit of the amount of carbon monoxide produced is generally 18 times or less.

The amount of carbon monoxide produced in the reducing agent of the present invention with respect to 1 g of the reducing agent is preferably about 0.95 to 3.75 mmol.

Here, in the present invention, the reduced product (valuables containing carbon) obtained by the reduction reaction of carbon dioxide may be a substance other than carbon monoxide, and specific examples thereof include methane. It is preferable that the reduced product such as carbon monoxide obtained by the reduction reaction of carbon dioxide be additionally converted into an organic substance or the like by microbial fermentation or the like. Examples of microbial fermentation include anaerobic fermentation. As the obtained organic substance, methanol, ethanol, acetic acid, butanol, derivatives thereof, mixtures thereof, and C5 or higher compounds such as isoprene may be exemplified.

In addition, reduced products such as carbon monoxide may be converted into C1 to C20 compounds including hydrocarbons and alcohols conventionally synthesized by petrochemicals using metal oxides or the like. Examples of specific compounds obtained include methane, ethane, propylene, methanol, ethanol, propanol, acetaldehyde, diethyl ether, acetic acid, butyric acid, diethyl carbonate, and butadiene.

[Properties of Reducing Agent]

The reducing agent of the present invention preferably has the following properties.

That is, in a stainless steel reaction tube with an inner diameter of 8 mm and a pressure gauge disposed in a flow path, when the reducing agent is filled at a height of 40 cm and nitrogen gas with a concentration of 100 vol% is passed at a 30 mL/min, the pressure rise in 10 minutes is preferably 0.03 MPaG or less and more preferably 0.01 MPaG or less.

A reducing agent exhibiting such properties can be determined that the filling density and the pore volume are within the above ranges, and can sufficiently increase the efficiency of converting carbon dioxide into carbon monoxide.

The reducing agent and the method of producing a gas of the present invention have been described above, but the present invention is not limited thereto.

For example, the reducing agent and the method of producing a gas of the present invention may have any other additional configuration, may be replaced with any configuration that exhibits similar functions, or may have some configurations omitted, with respect to the above embodiments.

Examples

Hereinafter, the present invention will be described in more detail with reference to examples and comparative examples, but the present invention is not limited to these examples.

(Example 1)

1. Production of Reducing Agent

First, as a precursor of the reducing agent, predetermined amounts of lanthanum nitrate hexahydrate (commercially available from FUJIFILM Wako Pure Chemical Corporation, purity: 99.9%), magnesium nitrate hexahydrate (commercially available from FUJIFILM Wako Pure Chemical Corporation, purity: 99.9%), and iron(III) nitrate nonahydrate (commercially available from FUJIFILM Wako Pure Chemical Corporation, purity: 99.9%) were weighed out.

Next, 4.32 g of citric acid (commercially available from FUJIFILM Wako Pure Chemical Corporation, purity: 99.5%) was weighed out and dissolved in 60 mL of deionized water to obtain a citric acid aqueous solution. Then, the precursor (metal nitrate) was added to the citric acid aqueous solution at room temperature with stirring to prepare a precursor aqueous solution. Here, La:Mg:Fe (molar ratio) in the precursor aqueous solution was set to 0.3:0.7:1.

After 30 minutes, 2.09 g of ethylene glycol (commercially available from FUJIFILM Wako Pure Chemical Corporation, purity: 99.5%) was added to the precursor aqueous solution, and the temperature was raised to 80°C.

A temperature of 80°C was maintained with continuous stirring until a viscous gel was formed. Then, the gel was transferred into a drying furnace.

The gel was dried at 120°C for 5 hours.

The swollen mass component of the produced organic and inorganic compounds was pulverized and heated from room temperature to 450°C at a rate of 8°C/min and then calcined at 450°C for 4 hours. Then, the temperature was additionally raised to 950°C at a rate of 8°C/min and calcination was then performed at 950°C for 8 hours.

Finally, the calcined mass component was finely pulverized mechanically to obtain a desired reducing agent. Here, the reducing agent was granular.

2. Identification of Reducing Agent

The metal composition in the oxygen carrier (metal oxide) was analyzed and identified by an ICP emission spectral analysis method using argon gas using SPECTRO ARCOS (commercially available from AMETEK).

A measurement solution was prepared by the following method. 50 to 100 mg of a reducing agent was dissolved in 100 mL of 1% nitric acid or 1% hydrofluoric acid, and the obtained solution was additionally diluted 10-fold.

As a result of analyzing the measurement solution, La:Mg:Fe (molar ratio) in the oxygen carrier was 0.3:0.7:1.

In addition, crystallographic data was collected by X-ray diffraction (XRD) using a RINT-TTRIII device (CuKa radiation, 50 kV, 300 mA).

As a result, the oxygen carrier (metal oxide) containing La, Mg and Fe had a perovskite type crystalline structure, and La:Mg:Fe (molar ratio) was 0.3:0.7:1, similar to the ratio obtained by an ICP emission spectral analysis method. In addition, the content thereof with respect to 100 parts by mass of the reducing agent was approximately 100 parts by mass.

(Example 2 to Example 54 and Comparative Examples 1 to 12)

Reducing agents were produced and identified in the same manner as in Example 1 except that the types and amount ratios of metal elements constituting the reducing agent (oxygen carrier) were changed as shown in Table 1 to Table 3. Here, in Example 51, a reducing agent was produced and identified in the same manner as in Example 1 except that, unlike Example 1, the swollen mass component of the produced organic and inorganic compounds was pulverized and heated from room temperature to 450°C at a rate of 8°C/min and then calcined at 450°C for 4 hours, then additionally heated to 750°C at a rate of 8°C/min and then calcined at 750°C for 8 hours.

Here, each reducing agent was granular. In addition, each oxygen carrier (metal oxide) had a perovskite type crystalline structure, and the content thereof with respect to 100 parts by mass of the reducing agent was approximately 100 parts by mass.

3. Evaluation of properties of reducing agent

Using a rapid catalyst evaluation system ("Single μ-reactor Rx-3050SR" commercially available from Frontier Laboratories Ltd.) including a micro reactor and a gas chromatograph mass spectrometer (GC/MS) directly connected to the micro reactor, the properties of the reducing agent were evaluated by the following procedure.

First, 0.2 g of the reducing agent was filled into a quartz reaction tube with an inner diameter of 3 mm and a length of 78 mm. Then, while flowing helium gas at a flow rate of 20 mL/min, the temperature was raised at a temperature increase rate of 40°C/min and heating was performed for 20 minutes.

Next, in order to activate the oxygen carrier, hydrogen gas (reducing gas) was flowed at a flow rate of 5 mL/min for 20 minutes to perform a reduction reaction of the oxygen carrier (first process), and the oxygen carrier was reduced.

In this case, the gas discharged from the outlet contained water vapors.

Then, for gas exchange, helium gas was flowed at a flow rate of 5 mL/min for 10 minutes, carbon dioxide gas was then flowed at a flow rate of 5 mL/min for 20 minutes, a reduction reaction of carbon dioxide (second process) was performed, and carbon dioxide gas (raw material gas) was reduced. In this case, the product gas discharged from the outlet contained carbon monoxide.

Subsequently, in order to evaluate properties of the reducing agent, hydrogen gas (reducing gas) was flowed into a micro reactor at a flow rate of 5 mL/min or 15 mL/min for 5 minutes, a reduction reaction of the reducing agent (first process) was performed, and the reducing agent was reduced. Therefore, the amount of hydrogen input with respect to 1 g of the reducing agent was 5.2 mmol or about 15 mmol. In this case, the gas discharged from the outlet of the micro reactor contained water vapors.

Then, for gas exchange, helium gas was flowed at a flow rate of 20 mL/min for 10 minutes, carbon dioxide gas was then flowed at a flow rate of 5 mL/min for 5 minutes, a reduction reaction of carbon dioxide (second process) was performed, and carbon dioxide gas (raw material gas) was reduced. Therefore, the amount of carbon dioxide introduced with respect to 1 g of the reducing agent was 5.2 mmol. In this case, the product gas discharged from the outlet of the reactor contained carbon monoxide.

Then, for gas exchange, helium gas was flowed at a flow rate of 20 mL/min for 10 minutes.

Here, in this test, when any gas was flowed, the temperature of the micro reactor was maintained at 650°C (923.15K), 800°C (1073.15K) or 850°C (1123.15K) as shown in Tables 1 to 3, and the test was performed under atmospheric pressure conditions.

Here, in Example 18 and Comparative Example 13, for evaluating properties of the reducing agents with an amount of hydrogen input of 0.78 mmol/g, the following procedure was performed for evaluation.

First, 0.514 g of a cylindrical reducing agent molded to a major diameter of 3 mm was filled into a quartz reaction tube with an inner diameter of 4 mm and a length of 430 mm. Then, the temperature was raised at a temperature increase rate of 40°C/min while flowing helium gas at a flow rate of 20 mL/min, and heating was performed for 20 minutes.

Next, in order to activate the oxygen carrier, hydrogen gas (reducing gas) was flowed at a flow rate of 5 mL/min for 20 minutes, a reduction reaction of the oxygen carrier (first process) was performed and the oxygen carrier was reduced. In this case, the gas discharged from the outlet contained water vapors.

Then, for gas exchange, helium gas was flowed at a flow rate of 5 mL/min for 10 minutes, carbon dioxide gas was then flowed at a flow rate of 5 mL/min for 20 minutes, a reduction reaction of carbon dioxide (second process) was performed, and carbon dioxide gas (raw material gas) was reduced. In this case, the product gas discharged from the outlet contained carbon monoxide.

Subsequently, in order to evaluate properties of the reducing agent, in a micro reactor, hydrogen gas (reducing gas) was flowed at a flow rate of 3 mL/min for 3 minutes, a reduction reaction of the reducing agent (first process) was performed and the reducing agent was reduced. Therefore, the amount of hydrogen input with respect to 1 g of the reducing agent was 0.78 mmol. In this case, the gas discharged from the outlet of the micro reactor contained water vapors.

Then, for gas exchange, helium gas was flowed at a flow rate of 20 mL/min for 10 minutes, carbon dioxide gas was then flowed at a flow rate of 3 mL/min for 3 minutes, a reduction reaction of carbon dioxide (second process) was performed, and carbon dioxide gas (raw material gas) was reduce. Therefore, the amount of carbon dioxide introduced with respect to 1 g of the reducing agent was 0.78 mmol. In this case, the product gas discharged from the outlet of the reactor contained carbon monoxide.

Then, for gas exchange, helium gas was flowed at a flow rate of 20 mL/min for 10 minutes.

Here, in this test, when any gas was flowed, the temperature of the micro reactor was maintained at 850°C (1123.15K), and the test was performed under atmospheric pressure conditions.

Here, measurement conditions in the gas chromatograph mass spectrometer are as follows.

Column temperature: 200°C
Injection temperature: 200°C
Detector temperature: 250°C
Column: EGA tube (L: 2.5 m, $\varphi$ (inner diameter): 0.15 mm, t: 0 mm)
Column flow rate: 1.00 mL/min
Split ratio: 250
Purge flow rate: 3.0 mL/min

The hydrogen utilization rate according to the reducing agent was calculated by the following formula.

$$\text{hydrogen utilization rate (\%)=amount of carbon monoxide}$$

$$\text{produced (mmol/1 g of reducing agent)}$$

$$\div\text{amount of hydrogen input (mmol/1 g}$$

$$\text{of reducing agent)}\times 100$$

The hydrogen utilization rates are shown in the following Table 1 to Table 3.

Here, in Table 1 to Table 3, the hydrogen utilization rate of the reducing agents of Examples 1 to 54 and Comparative Examples 2 to 12 is shown as a relative value when the hydrogen utilization rate of Comparative Example 1 is set to "1."

However, the hydrogen utilization rate when the amount of hydrogen input with respect to 1 g of the reducing agent is 0.78 mmol is shown as a relative value when the hydrogen utilization rate of Comparative Example 13 is set to "1."

These results are shown in the following Table 1 to Table 3.

Table 1

| | Oxygen carrier | | | | | | | | | | Electronegativity | | | Property evaluation temperature | | Relative hydrogen utilization rate | | |
|---|---|---|---|---|---|---|---|---|---|---|---|---|---|---|---|---|---|---|
| | Type of metal element | | | | | Ratio of metal elements (preparation ratio) | | | | | Aχ | Bχ | Bχ-Aχ | T[K] | $10^4 \times$ (Bχ-Aχ) /T | Amount of hydrogen input 0.78mmol/g | Amount of hydrogen input 5.2mmol/g | Amount of hydrogen input About 15mmol/g |
| | A1 | A2 | A3 | B1 | B2 | A1 | A2 | A3 | B1 | B2 | | | | | | | | |
| Example1 | La | Mg | - | Fe | - | 0.3 | 0.7 | - | 1 | - | 1.247 | 1.83 | 0.583 | 1123.15 | 5.19 | - | 15.55 | - |
| Example2 | La | Sr | - | Mn | - | 0.7 | 0.3 | - | 1 | - | 1.055 | 1.55 | 0.495 | 923.15 | 5.36 | - | 7.90 | 4.31 |
| Example3 | La | Mg | - | Fe | - | 0.3 | 0.7 | - | 1 | - | 1.247 | 1.83 | 0.583 | 1073.15 | 5:43 | - | 12.44 | - |
| Example4 | La | Sr | - | Mn | - | 0.5 | 0.5 | - | 1 | - | 1.025 | 1.55 | 0.525 | 923.15 ' | 5.69 | - | 6.65 | 4.88 |
| Example5 | La | Ca | - | Mn | Fe | 0.5 | 0.5 | - | 0.8 | 0.2 | 1.05 | 1.606 | 0.556 | 923.15 | 6.02 | - | 10.33 | 7.12 |
| Example6 | La | Ca | - | Mn | Fe | 0.5 | 0.5 | - | 0.7 | 0.3 | 1.05 | 1.634 | 0.584 | 923.15 | 6.33 | | 10.14 | 7.43 |
| Example7 | i La | Ca | - | Fe | Mn | 0.5 | 0.5 | - | 0.5 | 0.5 | 1.05 | 1.69 | 0.64 | 923.15 | 6.93 | - | 10.38 | 7.67 |
| Example8 | La | Sr | - | Co | Fe | 0.6 | 0.4 | - | 0.2 | 0.8 | 1.04 | 1.84 | 0.8 | 1123.15 | 7.12 | - | 9.35 | - |
| Example9 | La | Sr | - | Fe | Mn | 0.5 | 0.5 | - | 0.5 | 0.5 | 1.025 | 1.69 | 0.665 | 923.15 : | 7.20 | - | 6.83 | 5.17 |
| Example10 | La | Ca | - | Co | Mn | 0.5 | 0.5 | - | 0.5 | 0.5 | 1.05 | 1.715 | 0.665 | 923.15 | 7.20 | - | 3.32 | - |
| Example11 | La | Sr | - | Fe | Al | 0.3 | 0.7 | - | 0.9 | 0.1 | 0.995 | 1.808 | 0.813 | 1123.15 | 7.24 | - | 9,52: | - |
| Example12 | La | Sr | Mg | Fe | - | 0.2 | 0.7 | 0.1 | 1 | - | 1.016 | 1.83 | 0.814 | 1123.15 | 7.25 | - | 8.56 | - |
| Example13 | La | Sr | - | Fe | Cr | 0.3 | 0.7 | - | 0.9 | 0.1 | 0.995 | 1.813 | 0.818 | 1123.15 | 7,28 | - | 4.69 | - |
| Example14 | La | Sr | - | Fe | In | 0.3 | 0.7 | - | 0.7 | 0.3 | 0.995 | 1.815 | 0.82 | 1123,15 | 7.30 | - | 6.95 | - |
| Example1S | Nd | Ba | - | Co | Fe | 0.5 | 0.5 | - | 0.1 | 0.9 | 1.015 , | 1.835 | 0.82 | 1123.15 | 7.301 | | 10.87 | |
| Example16 | La | Cs | - | Fe | - | 0.7 | 0.3 | - | 1 | - | 1.007 | 1.83 | 0.823 | 1123.15 | 7.33 | - | 17.44 | - |
| Example17 | Nd . | Sr | - | Fe | - | 0.3 | 0.7 | - | 1 | - | 1.007 | 1.83 | 0.823 | 1123.15 | 7.33 | - | 8.68 | - |
| Example18 | La | Sr | - | Fe | - | 0.3 | 0.7 | - | 1 | - | 0.995 | 1.83 | 0.835 | 1123.15 | 7.43 | 5.66 | 8.36 | - |
| Example19 | La | Ba | - | Co | Fe | 0.7 | 0.3 | - | 0.1 | 0.9 | 1.037 | 1.835 | 0.798 | 1073.15 | 7.44 | - | 6.51 | - |
| Example20 | La | Sr | - | Co | Mn | 0.5 | 0.5 | - | 0.5 | 0.5 | 1.025 | 1.715 | 0.69 | 923.15 | 7.47 | - | 4.54 | - |
| Example21 | La | Sr | - | Fe | Co | 0.3 | 0.7 | - | 0.9 | 0.1 | 0.995 | 1.835 | 0.84 | 1123.15 | 7.479 | - | 10.79 | - |

(continued)

| | Oxygen carrier | | | | | | | | | | Electronegativity | | | Property evaluation temperature | | Relative hydrogen utilization rate | | |
|---|---|---|---|---|---|---|---|---|---|---|---|---|---|---|---|---|---|---|
| | Type of metal element | | | | | Ratio of metal elements (preparation ratio) | | | | | $A\chi$ | $B\chi$ | $B\chi$-$A\chi$ | T[K] | $10^4\times$ ($B\chi$-$A\chi$)/T | Amount of hydrogen input 0.78mmol/g | Amount of hydrogen input 5.2mmol/g | Amount of hydrogen input About 15mmol/g |
| | A1 | A2 | A3 | B1 | B2 | A1 | A2 | A3 | B1 | B2 | | | | | | | | |
| Example22 | La | Sr | - | Fe | Cu | 0.3 | 0.7 | - | 0:9 | 0.1 | 0.995 | 1.837 | 0.842 | 1123.15 | 7.50 | - | 3.60 | - |
| Example23 | La | Sr | - - | Fe | Ni | 0.3 | 0.7 | - | 0.9 | 0.1 | 0.995 | 1.838 | 0.843 | 1123.15 | 7.51 | - | 7.60 | - |
| Example24 | La | Na | Sr | Fe | - | 0.25 | 0.05 | 0.7 | 1 | - | 0.9865 | 1.83 | 0.8435 | 1123.15 | 7.51 | - | 8.47 | - |
| Example25 | La | K | Sr | Fe - | - | 0.25 | 0.05 | 0.7 | 1 | - | 0.981 | 1.83 | 0.849 | 1123.15 | 7.56 | - | 8.75 v | - |

Table 2

| | Oxygen carrier | | | | | | | | | | Electronegativity | | | Property evaluation temperature | | Relative hydrogen utilization rate | | |
|---|---|---|---|---|---|---|---|---|---|---|---|---|---|---|---|---|---|---|
| | Type of metal element | | | | | Ratio of metal elements (preparation ratio | | | | | Aχ | Bχ | Bχ-Aχ | T[K] | $10^4 \times$ (Bχ-Aχ) /T | Amount of hydrogen input 0.78mmol/g | Amount of hyarogen input 5.2mmol/g | Amount of hydrogen input About 15mmol/g |
| | A1 | A2' | A3 | B1 | B2 | A1 | A2 | A3 | B1 | B2 | | | | | | | | |
| Example26 | La | Rb | Sr | Fe | - | 0.25 | 0.05 | 0.7 | 1 | - | 0.981 | 1.83 | 0.849 | 1123.15 | 7.56 | - | 8.04 | - |
| Example27 | La | Cs | Sr | Fe | - | 0.25 | 0.05 | 0.7 | 1 | - | 0.9795 | 1.83 | 0.8505 | 1123.15 | 7.57 | - | 7.39 | - |
| Example28 | La | Li | Sr | Fe | - | 0.15 | 0.15 | 0.7 | 1 | - | 0.977 | 1.83 | 0.853 | 1123.15 | 7.59 | - | 5.13 | - |
| Example29 | La | Cs | - | Fe | - | 0.7 | 0.3 | - | 1 | - | 1.007 | 1.83 | 0.823 | 1073.15 | 7.67 | - | 16.16 | - |
| Example30 | Nd | Sr | - | Fe | Ni | 0.3 | 0.7 , | - | 0.9 | 0.1 | 1.007 | 1.838 | 0,831 | 1073.15 | 7.74 | - | 7.38 | - |
| Example 31 | La | Sr | - | Fe | Ga | 0.3 | 0.7 | - | 0.9 | 0.1 | 0.995 | 1.828 | 0.833 | 1073.15 | 7.76 | - | 7.16 | - |
| Example 32 | La | Sr | - | Fe | Pd | 0.3 | 0.7 | - | 0.9 | 0.1 | 0.995 | 1.867 | 0.872 | 1123.15 | 7.76 | - | 5.80 | - |
| Example33 | La | Sr | - | Fe | - | 0.3 | 0.7 | - | 1 | - | 0.995 | 1.83 | 0.835 | 1073.15 | 7.78 | - | 7.41 | - |
| Example 34 : | La | Ba | - | Fe | - | 0.3 | 0.7 | - | 1 | - | 0.953 | 1.83 | 0.877 | 1123.15 | 7.81 | - | 7.81 | - |
| Example35 | La | Sr | - | Fe | Co | 0.3 | 0.7 | - | 0.9 | 0.1 | 0.995 | 1.835 | 0.84 | 1073.15 | 7.827 | - | 8.76 | - |
| Example 36 | Sr | Ba | - | Fe | - | 0.7 | 0.3 | - | 1 | - | 0.932 | 1.83 | 0.898 | 1123.15 | 8.00 | - | 3.29 | - |
| Example 37 | La | - | - | Ga | Co | 1 | - | - | 0.5 | 0.5 | 1.1 | 1.845 | 0.745 | 923.15 | 8:07 | - | 1.37 | - |
| Comparative Example 1 | La. | Sr | - | Fe | - | 0.75 | 0.25 | - | ' 1 | | 1.0625 | 1.83 | 0.7675 | 923.15 | 8.31 | - | 1.00 | 100 |
| Comparative Example 2 | Sr | Ba | - | Fe | - | 0.7 | 0.3 | - | 1 | - | 0.932 | 1.83 | 0.898 | ' 1073.15 | 8.37 | - | 0,81 | - |
| Comparative Example 3 | La - | - | - | Cu | - | 1 | - | - | 1 | - | 1.1 | 1.9 | 0.8 | 923.15 | 8.67 | - | 0.44 | 0.57 |
| Comparative Example 4 | La | Sr | - | Co | - | 0.5 | 0.5 | - | 1 | - | 1.025 | 1.88 | 0.855 | 923.15 | 9.26 | - | 0.39 | 0.18 |
| C mpar ti e Example 5 | Sr | - | - | Sn | - | 1 | - | - | 1 | - | 0.95 | 1.96 | 1.01 | 1073.15 | 9:41 | - | 0.76 | - |

| | Oxygen carrier | | | | | | | | | | Electronegativity | | | Property evaluation temperature | | Relative hydrogen utilization rate | | |
|---|---|---|---|---|---|---|---|---|---|---|---|---|---|---|---|---|---|---|
| | Type of metal element | | | | | Ratio of metal elements (preparation ratio) | | | | | Aχ | Bχ | Bχ-Aχ | T[K] | $10^4 \times$ (Bχ-Aχ)/T | Amount of hydrogen input 0.78mmol/g | Amount of hyarogen input 5.2mmol/g | Amount of hydrogen input About 15mmol/g |
| | A1 | A2' | A3 | B1 | B2 | A1 | A2 | A3 | B1 | B2 | | | | | | | | |
| Comparative Example 6 | La | - | - | Pd | - | 1 | - | - | 1 | - | 1.1 | 2.2 | 1.1 | 1123.15 | 9.79 | - | 0.09 | - |
| Comparative Example 7 | Sr | - | - | Co | - | 1 | - | - | 1 | - | 0.95 | 1.88 | 0.93 | 923.15 | 10.07 | - | 0.13 | - |
| Comprative Example 8 | La | - | - | Pd | - | 1 | - | - | 1 | - | 1.1 | 2.2 | 1.1 | 1073.15 | 10.25 | - | 0,22 | - |
| Comprative Example 9 | Sr | - | - | Cu | - | 1 | - | - | 1 | - | 0.95 | 1.9 | 0:95 | 923.15 | 10.29 | - | 0.43 | 0.16 |
| Comparative Example 10 | La | - | - | Rh | - | 1 | - | - | 1 | - | 1.1 | 2.28 | 1.18 | 1123.15 | 10.51 | - | 0.90 | - |
| Comparative Example 11 | Ba | - | - | Cu | - | 1 | | - | 1 | | 0.89 | 1.9 | 1.01 | 923.15 | 10.94 | | 0.24 | 0.14 |
| Comparative Example 12 | La | Sr | - | Mo | - | 0.5 | 0.5 | - | 1 | - | 1.025 | 2.16 | 1.135 | 923.15 | 12.29 | - | 0.47 | 0.52 |
| Comparative Example 13 | La | Sr | - | Fe | - | 0.75 | 0.25 | - | 1 | - | 1.0625 | 1.83 | 0.7675 | 1123.15 | 8.31 | 1.00 | - | - |

EP 4 309 786 A1

Table 3

| | Oxygen carrier | | | | | | | | | | Electronegativity | | | Property evaluation temperature | | Relative hydrogen utilization rate | | |
|---|---|---|---|---|---|---|---|---|---|---|---|---|---|---|---|---|---|---|
| | Type of metal element | | | | | Ratio of metal elements (preparation ratio) | | | | | Aχ | Bχ | Bχ-Aχ | T[K] | $10^4 \times$ (Bχ-Aχ)/T | Amount of hydrogen input 0.78mmol/g | Amount of hydrogen input 5.2mmol/g | Amount of hydrogen input About 15mmol/g |
| | A1 | A2 | A3 | B1 | B2 | A1 | A2 | A3 | B1 | B2 | | | | | | | | |
| Example 38 | La | Ca | - | Mn | - | 0.5 | 0.5 | - | 1 | | 1.05 | 1.55 | 0.5 | 923.15 | 5.42 | - | 5.38 | 3.02 |
| Example39 | La | Ba | - | Mn | - | 0.5 | 0.5 | - | 1 | - | 0.995 | 1.55 | 0.555 | 923.15 | 6.01 | - | 5.14 | 3.80 |
| Example 40 | La | - | - | Mn | Mg | 1 | - | - | 0.8 | 0.2 | 1.1 | 1.502 | 0.402 | 923.15 | i 4.35 | - | 4.92 | 4.09 |
| Example41 | La | Ca | - | Mn | - | 0.3 | 0.7 | - | 1 | - | 1.03 | 1.55 | 0.82 ' | 923.15 | 5.63 | - | 3.73 | - |
| Example42 | La | Ca | - | Mn | - | 0.7 | 0.3 | - | 1 | - | 1.07 | 1.55 | 0.48 | 923.15 | 5.20 | - | 3.30 | - |
| Example43 | La | - | - | Mn | - | 1 | - | - | 1 | - | 1.1 | 1.55 | 0.45 | 923.15 | 4.87 | - | 3.00 | 2.65 |
| Example44 | La | Ca | - | Cr | - | 0.5 | 0.5 | - | 1 | - | 1.05 | 1.66 ' | 0.61 - | 923.15 | 6.61 | - | 2.96 | 1.77 |
| Example45 | La | Sr | - | Mn | - | 0.3 | 0.7 | - | 1 | - | 0.995 | 1.55 | 0.555 | 923.15 | 6.01 | - | 2.16 | - |
| Example46 | La | Sm | - | Mn | - | 0.5 | 0.5 | - | 1 | - | 1.135 | 1.55 | 0.415 | 923.15 | 4.50 | - | 1.46 | 1.53 |
| Example47 | La | - | - | Mn | Sc | 1 | - | - | 0.5 | 0.5 | 1.1 | 1:455 | 0.355 | 923.15 | 3.85 | - | 1.94 | 1.84 |
| Example48 | La | - | - | Mn | Sc | 1 | - | - | 0.8 | 0.2 | 1.1 | 1.512 | 0.412 | 923.15 | 4.46 | - | 2.26 | 2.17 |
| Example49 | Ca | - | - | Mn | - | 1 | - | - | 1 | - | 1 | 1.55 | 0.55 ' | 923.15 | 5.96 | - | 1.40 | - |
| Example50 | La | - | - | Fe | Mn | 1 | - | - | 0.5 | 0.5 | 1.1 | 1.69 | 0.59 | 923.15 | 6.39 | - | 1.30 | 1.50 |
| Example51 | La | Sr | - | Mn | - | 0.5 | 0.5 | - | 1 | - | 1.025 | 1.55 | 0.525 . | 923.15 | - 5.69 | - | 1.26 | 4.88 |
| Example 52 | La | - | - | Mn | w | 1 | - | - | 0.8 | 0.2 | 1.1 | 1.712 | 0.612 . | 923.15 | 6.63 | - | 1.26 | 1.18 |
| Example 53 | La | Pr | - , | Mn | - | 0.5 | 0.5 | - | 1 | - | 1.115 | 1.55 | 0.435 | 923.15 | 4.71 | - | 1.10 | - |
| Example51 | La | Gd | - | Mn | - | 0.5 | 0.5 | - | 1 | - | 1.15 | 1.55 | 0.4 | 923.15 | 1.33 | - | 1:06 | 1.02 |

EP 4 309 786 A1

The reducing agents of examples had a high hydrogen utilization rate. In addition, the hydrogen utilization rate could be adjusted by changing the types and ratios of metal elements constituting the reducing agent (oxygen carrier).

On the other hand, the reducing agents of comparative examples had a low hydrogen utilization rate.

In addition, the composition having a high hydrogen utilization rate varied depending on the reaction temperature, and the hydrogen utilization rate at each reaction temperature could be adjusted using the value of $10^4 \times [(B\chi - A\chi)/T]$.

**Claims**

1. A reducing agent that produces valuables containing carbon by reducing carbon dioxide,

   wherein the reducing agent contains an oxygen carrier having a perovskite type crystalline structure represented by a composition formula: $ABO_x$ (x is a real number of 2 to 4) and having oxygen ion conductivity,
   wherein the A-site element includes at least one of metal elements belonging to Group 1 to Group 3 in the periodic table,
   wherein the B-site element includes at least one metal element different from the A-site element, and
   wherein, when the electronegativity of the A-site element is $A\chi$, the electronegativity of the B-site element is $B\chi$, and the temperature at which carbon dioxide is brought into contact with the reducing agent is T(K), relationships of $A\chi < B\chi$ and $10^4 \times [(B\chi - A\chi)/T] < 8.31$ are satisfied.

2. The reducing agent according to claim 1,
   wherein the electronegativity $A\chi$, the electronegativity $B\chi$ and the temperature T(K) satisfy a relationship of $10^4 \times [(B\chi - A\chi)/T] \leq 8.07$.

3. The reducing agent according to claim 1,
   wherein the electronegativity $A\chi$, the electronegativity $B\chi$ and the temperature T(K) satisfy a relationship of $10^4 \times [(B\chi - A\chi)/T] \leq 7.47$.

4. The reducing agent according to any one of claims 1 to 3,
   wherein the electronegativity $A\chi$ and the electronegativity $B\chi$ additionally satisfy a relationship that $B\chi - A\chi$ is 0.90 or less.

5. The reducing agent according to any one of claims 1 to 3,
   wherein the electronegativity $A\chi$ and the electronegativity $B\chi$ additionally satisfy a relationship that $B\chi - A\chi$ is 0.75 or less.

6. The reducing agent according to any one of claims 1 to 5,
   wherein the electronegativity $A\chi$ is 0.93 to 1.3.

7. The reducing agent according to any one of claims 1 to 5,
   wherein the electronegativity $A\chi$ is 1 to 1.2.

8. The reducing agent according to any one of claims 1 to 7,
   wherein the electronegativity $B\chi$ is 1.40 to 1.88.

9. The reducing agent according to any one of claims 1 to 8,
   wherein the A-site element includes at least one of lanthanum (La), calcium (Ca), strontium (Sr), barium (Ba), neodymium (Nd), samarium (Sm), gadolinium (Gd) and praseodymium (Pr) .

10. The reducing agent according to claim 9,
    wherein the A-site element further includes at least one element selected from among lithium (Li), sodium (Na), potassium (K), rubidium (Rb), cesium (Cs), and magnesium (Mg).

11. The reducing agent according to claim 9,

    wherein the A-site element includes a first metal element having an electronegativity of more than 1 and a second metal element having an electronegativity of 1 or less, and
    wherein the molar ratio of the first metal element to the second metal element is 2.5 or less.

**12.** The reducing agent according to any one of claims 1 to 11,
wherein the B-site element includes at least one of magnesium (Mg), scandium (Sc), chromium (Cr), manganese (Mn), iron (Fe), cobalt (Co), nickel (Ni) and gallium (Ga).

**13.** The reducing agent according to claim 12,
wherein the B-site element includes at least one metal element having an electronegativity of 1.83 or less.

**14.** The reducing agent according to claim 12,
wherein the B-site element includes at least one metal element having an electronegativity of 1.81 or less.

**15.** The reducing agent according to any one of claims 1 to 14,
wherein the amount of the oxygen carrier with respect to 100 parts by mass of the reducing agent is more than 90 parts by mass.

**16.** The reducing agent according to any one of claims 1 to 15,
wherein the reducing agent, by being brought into contact with a raw material gas containing carbon dioxide, reduces carbon dioxide and is used to produce a product gas containing carbon monoxide as the valuables containing carbon.

**17.** The reducing agent according to any one of claims 1 to 16,
wherein the reducing agent is reduced by being brought into contact with a reducing gas containing hydrogen.

**18.** The reducing agent according to claim 17,
wherein the amount of hydrogen brought into contact with the reducing agent with respect to 1 g of the reducing agent is 0.01 to 50 mmol.

**19.** The reducing agent according to claim 17,
wherein the amount of hydrogen brought into contact with the reducing agent with respect to 1 g of the reducing agent is 1 to 50 mmol.

**20.** The reducing agent according to any one of claims 16 to 19,
wherein the amount of carbon dioxide brought into contact with the reducing agent with respect to 1 g of the reducing agent is 0.01 to 50 mmol.

**21.** The reducing agent according to any one of claims 16 to 19,
wherein the amount of carbon dioxide brought into contact with the reducing agent with respect to 1 g of the reducing agent is 1 to 50 mmol.

**22.** The reducing agent according to any one of claims 1 to 21,
wherein the reducing agent is used in separate reduction processes, which are a reduction reaction of the carbon dioxide and a reduction reaction of the reducing agent.

**23.** A method of producing a gas, comprising
bringing the reducing agent according to any one of claims 1 to 22 into contact with a raw material gas containing carbon dioxide, reducing the carbon dioxide, and producing a product gas containing carbon monoxide.

Fig. 1

OXYGEN ATOM

A-SITE ELEMENT

B-SITE ELEMENT

## INTERNATIONAL SEARCH REPORT

International application No.

**PCT/JP2022/011954**

| A. CLASSIFICATION OF SUBJECT MATTER |
|---|
| ***B01J 23/83***(2006.01)i; ***B01J 23/34***(2006.01)i; ***B01J 23/86***(2006.01)i; ***B01J 23/889***(2006.01)i; ***C01B 32/40***(2017.01)i<br>FI: B01J23/83 M; C01B32/40; B01J23/34 M; B01J23/86 M; B01J23/889 M |
| According to International Patent Classification (IPC) or to both national classification and IPC |

| B. FIELDS SEARCHED |
|---|
| Minimum documentation searched (classification system followed by classification symbols)<br>B01J21/00-38/74; B01J23/86; B01J23/889; C01B32/40 |
| Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used)<br>JSTPlus/JST7580 /JSTChina(JDreamIII); CAplus/REGISTRY (STN) |

| C. | DOCUMENTS CONSIDERED TO BE RELEVANT | |
|---|---|---|
| Category* | Citation of document, with indication, where appropriate, of the relevant passages | Relevant to claim No. |
| X | US 8999283 B1 (UNIVERSITY OF SOUTH FLORIA) 07 April 2015 (2015-04-07)<br>    claims, column 7, line 16 to column 10, line 57, table 2, fig. 4, 15 | 1-4, 6-9, 11, 12, 15-23 |
| A | | 5, 10, 13, 14 |
| X | BROWER, Jeremy C. et al. Mesoporous Silica Supported Perovskite Oxides for Low Temperature Thermochemical CO2 Conversion. ChemCatChem. 2020, vol. 12, pp. 6317-6328, DOI:10.1002/cctc.202001216<br>    abstract,1., 2., 3.2.1, fig. 4 | 1-4, 6-9, 12, 13, 16-23 |
| A | | 5, 10, 11, 14, 15 |
| X | WO 2013/141385 A1 (JAPAN SCIENCE AND TECHNOLOGY AGENCY) 26 September 2013 (2013-09-26)<br>    claims, paragraphs [0019]-[0020], [0028]-[0029], [0035]-[0048] | 1-9, 12-16, 20-23 |
| A | | 10, 11, 17-19 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**22 April 2022** | Date of mailing of the international search report<br><br>**10 May 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

INTERNATIONAL SEARCH REPORT
Information on patent family members

International application No.

**PCT/JP2022/011954**

| Patent document cited in search report | | | Publication date (day/month/year) | Patent family member(s) | Publication date (day/month/year) |
|---|---|---|---|---|---|
| US | 8999283 | B1 | 07 April 2015 | (Family: none) | |
| WO | 2013/141385 | A1 | 26 September 2013 | EP 2829321 A1 claims, paragraphs [0021]-[0022], [0044]-[0051], [0067]-[0103] CN 104203403 A KR 10-2015-0008861 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018222749 A